**Europäisches Patentamt**

**European Patent Office**

**Office européen des brevets**

(19)

(11) Veröffentlichungsnummer : **0 391 297 B1**

(12) **EUROPÄISCHE PATENTSCHRIFT**

(45) Veröffentlichungstag der Patentschrift :
23.06.93 Patentblatt 93/25

(21) Anmeldenummer : 90106260.4

(22) Anmeldetag : 02.04.90

(51) Int. Cl.⁵ : **C08F 257/02,** C08F 279/02,
**C10M 149/04,**
// (C08F257/02, 226:02),
(C08F279/02, 226:02),
(C10N30/02, 30:04)

(54) **Aminogruppen enthaltendes Pfropfpolymer und seine Verwendung als dispergierender Viskositätsindexverbesserer.**

(30) Priorität : 05.04.89 DE 3910943

(43) Veröffentlichungstag der Anmeldung :
10.10.90 Patentblatt 90/41

(45) Bekanntmachung des Hinweises auf die
Patenterteilung :
23.06.93 Patentblatt 93/25

(84) Benannte Vertragsstaaten :
BE DE FR GB IT NL

(56) Entgegenhaltungen :
EP-A- 0 001 547
FR-A- 2 303 065
US-A- 4 715 975

(72) Erfinder : **Denzinger, Walter**
**Wormser Landstrasse 65**
**W-6720 Speyer (DE)**
Erfinder : **Mach, Helmut, Dr.**
**Dantestrasse 5**
**W-6900 Heidelberg (DE)**
Erfinder : **Mohr, Jürgen, Dr.**
**Hochgewanne 48**
**W-6718 Gruenstadt (DE)**
Erfinder : **Oppenlaender, Knut, Dr.**
**Otto-Dill-Strasse 23**
**W-6700 Ludwigshafen (DE)**
Erfinder : **Schwen, Roland, Dr.**
**Im Schlossgarten 7**
**W-6701 Friedelsheim (DE)**
Erfinder : **Vogel, Hans-Henning, Dr.**
**Damaschkeweg 1**
**W-6710 Frankenthal (DE)**

(73) Patentinhaber : **BASF Aktiengesellschaft**
**Carl-Bosch-Strasse 38**
**W-6700 Ludwigshafen (DE)**

EP 0 391 297 B1

**Beschreibung**

Die Erfindung betrifft ein Pfropfpolymer, bestehend aus einem hydrierten Vinyl-Aromat/Dien-Gerüstpolymer, auf das Allylamin aufgepropft ist.

Als VI-Verbesserer in Schmierölen werden bestimmte Polymere und Copolymere mit mittleren Molmassen zwischen 10 000 und 200 000 verwendet (vgl. z.B.: Ullmanns Encyklopädie der technischen Chemie, 4. Auflage, Band 20, s. 543 f., Weinheim 1981).

Gleichzeitig enthalten heute gebräuchliche Schmierstofformulierungen neben verschiedenartigen anderen Additiven auch Dispergatoren, die die Aufgabe haben, ölunlösliche Verbrennungsrückstände, die bei Dieselmotoren bis zu 10 Gew.% betragen können (Ruß, Koks, etc sowie harz- und asphaltartige Oxidationsprodukte, die ein Zusammenbacken zu Festpartikeln begünstigen), in Suspension zu halten und dadurch Ablagerungen an Metalloberflächen, Ölverdickungen und Schlammausscheidungen im Motor, sowie durch Neutralisation saurer Verbrennungsprodukte, korrosiven Verschleiß zu verhindern (vgl. z.B.: N.J.H. Small in Katalysatoren, Tenside und Mineralöladditive, hrsg. von J. Falbe und U. Hasserodt, G. Thieme Verl. Stuttgart 1978).

Bekannteste Beispiele solcher Dispergatoren sind die in der Literatur in großer Vielfalt beschriebenen unterschiedlichsten Umsetzungsprodukte von Alkenyl-, z.B. Polyisobutenylbernsteinsäureanhydriden meist mit Aminen, Polyaminen und ähnlichen Reagenzien (vgl. z.B.: Chem. Technol. Rev. No. 207, S. 3 ff., NDC, New Jersey, 1982).

Da diese Dispergatoren notwendigerweise polare Verbindungen sind oder zumindest eine ausreichende Zahl polarer Gruppen im Molekül enthalten, können die polaren Eigenschaften der Dispergatoren zu Eigenschaften der in der Regel unpolaren VI-Verbesserer in Konkurrenz stehen, indem z.B. gegenseitige negative Beeinflussung der Löslichkeit oder Quellbarkeit im Schmieröl eintreten kann.

Die Verträglichkeit der für eine Formulierung vorgesehenen Additive muß daher unbedingt gegeben sein und ist nicht in jedem Fall voraussagbar.

Deshalb war man bestrebt, die Eigenschaften von Dispergator und VI-Verbesserer in einem Polymer zu vereinigen, um einerseits Probleme der Additivverträglichkeit zu umgehen, zum anderen um die nötige Gesamtadditivierung einer Formulierung gegebenenfalls zu verringern.

Dazu wurden schon mehrere Gruppen von VI-Verbesserer mit Dispergierwirkung vorgeschlagen (vgl. z.B.: Chem. Technol. Rev. No. 207, S. 225 ff., NDC, New Jersey, 1982). Beispielsweise sind Acylgruppen tragende Polymere und Copolymere unterschiedlicher Zusammensetzung, die mit Aminogruppen enthaltenden Reagentien umgesetzt wurden (US 4 735 736; US 4 670 173) oder mit Aminen modifizierte Polymere auf der Basis verschiedener Polymerer und Copolymerer (US 4 715 975; EP 171 167, FR-A 2 303 065) genannt.

Diesen und anderen Beispielen gemeinsam ist oft eine verhältnismäßig hohe Belegung der Basispolymeren mit den nachträglich eingeführten polaren Gruppen. Da diese polaren Gruppen in der Regel Aminogruppen sind, bedeutet dies einen verhältnismäßig hohen Stickstoffgehalt.

Beispielsweise beträgt das Verhältnis von einer Amin enthaltenden Einheit (Allylamin) pro Einheit des Gerüstpolymeren (d. i. Ethylen bzw. Propylen) 1 : 100 bis 300, vorzugsweise 200.

Der geringste dort beschriebene Stickstoffgehalt beträgt demgemäß 1 Stickstoff (im Allylamin) pro 300 Moleküle Ethylen bzw. 300 Moleküle Propylen d.i. 14 : 300 x 28 = 0,0016 = 0,16 % bzw. für Propylen 0,11 %.

Es hat nun überraschenderweise gezeigt, daß die gezielte geringere Belegung mit Allylamineinheiten eines Vinyl-Aromat-Butadiengerüstpolymers z.B. durch Wahl einer geringeren Temperatur als der für den optimalen Zerfall des gewählten Initiators notwendigen - trotz Überschuß Allylamin, bezogen auf die aufzupolymerisierende Menge - Produkte mit gleicher oder, bezogen auf den Stickstoffgehalt, besserer dispergierender Wirkung erhalten werden.

Es bestand daher die Aufgabe, Pfropfpolymere vorzuschlagen, die weniger Aminogruppen, d.h. einen ingesamt geringeren Stickstoffgehalt aufweisen und eine unverändert gute oder sogar bessere Wirkung als VI-Verbesserer und Dispergator entfalten und eine hohe Scherstabilität aufweisen.

Diese Aufgabe wurde mit solchen Aminogruppen enthaltenden Pfropfpolymeren, bestehend aus einem Gerüstpolymer, auf das Allylamin aufgepropft ist, gelöst, bei dem das Gerüstpolymer ein hydriertes Vinyl-Aromat/Diencopolymer und der Gesamtstickstoffgehalt des Pfropfpolymers 0,001 bis 0, 05 Gew.% beträgt.

Besonders bevorzugt sind Pfropfpolymere der genannten Art, bei denen das Gerüstpolymer ein hydriertes Styrol/Butadien-Randomcopolymer mit einem Styrol/Butadienverhältnis von 60 zu 40 bis 50 zu 50, einem Molekulargewicht (Gewichtsmittel) von 5000 bis 500 000 und einem Hydriergrad von 95 bis 99,5 ist.

Als Ausgangsstoffe für das Gerüstpolymer kommen allgemein hydrierte Vinyl-Aromat/Dien-Copolymere in Betracht, die als VI-Verbesserer mit besonders hoher Scherstabilität bekannt sind.

Als Vinyl-Aromat-Comonomer werden Vinyl-Aromaten, wie Styrol, α-Methylstyrol, kernmethylierte bzw. alkylierte Styrole verwendet, vorzugweise jedoch das unsubstituierte Styrol.

Beispiele für konjugierte Dien-Comonomere sind Chloropren, 2,3-Dimethyl-1,3-butadien, Isopren und 1,3-Butadien, wobei die beiden letzteren bevorzugt Anwendung finden. Auch Mischungen sind möglich.

Die Copolymere können sowohl statistisch als auch in Blöcken aufgebaut, linear oder verzweigt sein, stöchiometrisch oder im Überschuß mit einer der Komponenten, wobei der Anteil an Vinylaromat zwischen 20 und 80 %, vorzugsweise zwischen 40 und 60 % liegt, gebildet sein.

Ihre Herstellung erfolgt durch radikalische oder anionische Copolymerisation oder Blockcopolymerisation nach an sich bekannten Methoden z.B. gemäß W.R. Sorenson und T.W. Campbell, Präparative Methoden der Polymerenchemie, Verlag Chemie Weinheim 1962, S. 204ff.

Die mittleren Molgewichte (Gewichtsmittel) solcher Copolymerer liegen zwischen 10 000 und 200 000, bevorzugt zwischen 80 000 und 120 000.

Die im Dienteil nach Polymerisation bzw. Copolymerisation verbliebenen olefinischen Doppelbindungen werden in allen Fällen anschließend an geeigneten stückigen oder homogen gelösten Katalysatoren und meist unter erhöhtem Wasserstoffdruck hydriert.

Die Herstellung dieser Ausgangspolymere ist in DE 20 60 914 und DE 18 11 516 eingehend beschrieben, worauf hiermit bezug genommen wird.

Der verbleibende Restanteil an ungesättigten Einheiten beträgt zwischen 0,2 und 4 % bezogen auf den Dienanteil, vorzugsweise aber nicht mehr als ca. 0,5 % oder anders ausgedrückt, der Hydriergrad (d.h. in Prozent der maximal möglichen Absättigung der verbliebenen olefinischen Doppelbindungen) beträgt 96 bis 99,5 %.

Ein Beispiel eines hydrierten statistischen Styrol/Butadien-Copolymerisats ist ein Produkt mit einem Massenverhältnis Styrol zu Butadien von 57:43, einem Molekulargewicht (Gewichtsmittel) von 110.000 und einem Hydriergrad von 99,5 %.

Durch Umsetzung und Gerüstpolymere mit Allylamin in Anwesenheit von Radikalinitiatoren gelingt es, Pfropfcopolymere mit unterschiedlichen Stickstoffgehalten herzustellen.

Die Pfropfreaktion kann auf an sich bekannte Art und Weise durchgeführt werden, indem man z.B. das Gerüstpolymere in einem Kohlenwasserstofflösungsmittel, wie Hexan oder Cyclohexan, gemeinsam mit dem Allylamin vorlegt und bei höherer Temperatur, im allgemeinen bei Rückflußtemperatur des Lösungsmittels einen Radikalinitiator auf einmal oder kontinuierlich zufügt, wobei man in der Regel eine solche Reaktionstemperatur wählt, die unterhalb der für den gewählten Initiator optimalen Radikalbildungstemperatur bleibt.

Obwohl die Natur der erhaltenen Pfropfpolymerisate nicht im einzelnen bekannt ist, wird angenommen, daß jeweils ein Molekül Allylamin mit dem $\alpha$-Kohlenstoffatom der Styroleinheiten reagiert. Die Zahl der umgesetzten Einheiten des Gerüstpolymers ist jedoch äußerst gering, da durch die Wahl der Reaktionsbedingungen die Radikalkonzentration sehr gering gehalten wird, so daß trotz überschüssigen Allylamins nur eine geringe Umsetzung zu den gewünschten Pfropfpolymeren mit sehr geringem Stickstoffgehalt stattfindet.

Es ist ebenfalls möglich, das gelöste Polymere im siedenden Lösungsmittel vorzulegen und eine Mischung von Allylamin und Initiator zuzudosieren. Auch andere Varianten sind denkbar und im Prinzip bekannt. Als Initiatoren kommen z.B. Azoisobutyronitril, Peroxide, Hydroperoxide und verwandte Verbindungen, die als Initiatoren bekannt sind, in Betracht.

Außerdem ist es möglich, die Pfropfreaktion in Emulsion nach an sich bekannten Methoden durchzuführen.

Um eine gleichzeitige Vernetzung der Ketten des Hauptpolymeren zu vermeiden, kann die Reaktion in Anwesenheit eines Reglers geführt werden, wie Mercaptoethanol oder Dodecylmercaptan

Es genügt jedoch auch ein Überschuß der Pfropfkomponente Allylamin, bezogen auf den Olefin-, d.h. Styrolgehalt des Gerüstpolymers, die ihrerseits regelnd im Sinne der Vernetzungsverhinderung wirken kann.

Die Aufarbeitung kann erfolgen, indem man das Lösungsmittel und das überschüssige Allylamin destillativ entfernt oder vor der Entfernung der flüchtigen Bestandteile ein geeignetes Öl als bereits endgültiges Lösungsmittel zufügt oder indem man die Reaktionslösung zunächst mit geeigneten Waschlösungen behandelt (gesätt. Ammoniumchloridlösung, Na-Hydrogensulfatlösung, anschließend Wasser) und nach Trocknung mit gängigen Trockenmitteln von flüchtigen Bestandteilen befreit. Falls die Pfropfung in Emulsion durchgeführt wurde, wird gleichermaßen nach an sich bekannten Methoden, z.B. Denaturierung oder Koagulation, aufgearbeitet.

Als Mineralschmierstoffe kommen übliche für Schmieröle verwendete Kohlenwasserstoffe in Betracht, die aus natürlich vorkommenden, paraffinischen oder naphthenischem Erdöl durch Destillation und anschließende Raffination gewonnen werden.

Außer den erfindungsgemäß zu verwendenden Zusätzen können die Mineralschmierölzusammensetzungen noch andere bekannte Additive, z.B. Antioxidantien, Mittel zur Senkung des Stockpunktes, Farbstoffe, Detergentien usw. enthalten.

Die Pfropfcopolymerisate werden in Mengen von 0,5 bis 6, vorzugsweise 1 bis 5 Gew.% im Mineralöl bei 80 bis 130°C gelöst.

Beispiele

a) 200 Teile eines hydrierten Styrol/Butadien-Copolymerisats mit einem Massenverhältnis Styrol zu Butadien von 57 zu 43 und einem mittleren Molgewicht von 100.000 bis 110.000 werden in 1000 Teilen Cyclohexan gelöst. Man gibt 40 Teile Allylamin zu und erhitzt unter Stickstoffatmosphäre am Rückfluß.

Zu der siedenden Mischung gibt man dann 10 Teile Dicumylperoxid langsam zu und erhitzt nach beendeter Zugabe noch 2 Stunden lang am Rückfluß. Nach dem Abkühlen wird nacheinander mit je 2000 Teilen gesättigter Ammoniumchloridlösung und Wasser gewaschen und die organische Phase mit Natriumsulfat getrocknet.

Nach Entfernen des Lösungsmittels und flüchtiger Bestandteile sowie gegebenenfalls des überschüssigen Allylamins erhält man das Polymere als Rückstand mit einem Gesamtstickstoffgehalt von 0,006 Gew.%.

b) Zur Beurteilung der Dispergierwirkung von Additiven kann ein Tüpfeltest als Vorabtest herangezogen werden, wie er zum Beispiel von A. Schilling in "Les Huiles pour Moteurs et le Graissage des Moteurs, Vol. 1, 1962, Seite 89 f. in etwas modifizierter Form beschrieben ist.

Dazu stellt man eine Lösung des unter a) erhaltenen Polymeren in einem unlegierten Grundöl her, in der man anschließend Ruß (z.B.: MT-Ruß Thermax, Lehmann & Voss & Co., Hamburg) bei ca. 50 °C unter Rühren eine Stunde lang dispergiert. Diese Dispersion wird auf einem Fließpapier (Filterpapier) wie ein Chromatogramm ca. 20 Stunden lang entwickelt.

Man vergleicht die Flächen von reinem Laufmittel (Öl) und verteiltem Ruß.

Das Rußtragevermögen ist naturgemäß abhängig von der Konzentration des Additivs und auch von der Viskosität des Grundöls:

| Öl | Polymer | Polymergehalt % | Rußgehalt % | Flächenanteile Ruß % |
|---|---|---|---|---|
| NIA | – | – | 0,36 | 8 |
| NIA | Gerüstpolymer gemäß Bsp. a) | 1,5 | 0,36 | 42 |
| NIA | Pfropfpolymer gemäß Bsp. a) | 1,5 | 0,36 | 68 |
| NIIA | | – | 0,36 | 16 |
| NIIA | Gerüstpolymer gemäß Bsp. a) | 1,5 | 0,36 | 58 |
| NIIA | Pfropfpolymer gemäß Bsp. a) | 1,5 | 0,36 | 63 |

**Patentansprüche**

1. Aminogruppen enthaltendes Pfropfpolymer, bestehend aus einem Gerüstpolymer, auf das Allylamin aufgepfropft ist, dadurch gekennzeichnet, daß das Gerüstpolymer ein hydriertes Vinyl-Aromat/Diencopolymer ist und daß der Gesamtstickstoffgehalt des Pfropfpolymers 0,001 bis 0,05 Gew.% beträgt.

2. Pfropfpolymer gemäß Anspruch 1, dadurch gekennzeichnet, daß das Gerüstpolymer ein hydriertes Styrol/Butadien-Random Copolymer mit einem Styrol/Butadienverhältnis von 60 zu 40 bis 50 zu 50, einem Molekulargewicht von 5000 bis 500.000 und einem Hydriergrad von 95 bis 99,5 ist.

3. Schmierölzuzammensetzung, bestehend aus einem Kohlenwasserstoffgrundöl und Schmieröladditiven, dadurch gekennzeichnet, daß sie in als dispergierenden Viskositätsindexverbesserer wirksamen Mengen Pfropfpolymere gemäß Anspruch 1 enthält.

**4.** Schmierölzusammensetzung gemäß Anspruch 3, dadurch gekennzeichnet, daß der Gehalt an Pfropfpolymeren gemäß Anspruch 1 0,5 bis 6 Gew.%, bezogen auf die Schmierölzusammensetzung beträgt.

**5.** Verwendung von Aminogruppen enthaltenden Pfropfpolymeren gemäß Anspruch 1 als Zusatz in als dispergierenden Viskositätsindex verbesserer wirksamen Mengen zu Schmieröl.

## Claims

**1.** An amino-containing graft polymer comprising a backbone polymer grafted with allylamine, wherein the backbone polymer is a hydrogenated vinylaromatic/diene copolymer and the total nitrogen content of the graft polymer is from 0.001 to 0.05% by weight.

**2.** A graft polymer as claimed in claim 1, wherein the backbone polymer is a hydrogenated styrene/butadiene random copolymer having a styrene/butadiene ratio of from 60 : 40 to 50 : 50, a molecular weight of from 5,000 to 500,000 and a degree of hydrogenation of from 95 to 99.5.

**3.** A lubricating oil composition comprising a hydrocarbon base oil and lubricating oil additives, containing graft polymers as claimed in claim 1 in amounts effective as viscosity index improvers having dispersant properties.

**4.** A lubricating oil composition as claimed in claim 3, wherein the content of graft polymers as claimed in claim 1 is from 0.5 to 6% by weight, based on the lubricating oil composition.

**5.** The use of an amino-containing graft polymer as claimed in claim 1 as lubricating oil additive in amounts effective as a viscosity index improver having dispersant properties.

## Revendications

**1.** Polymère greffé contenant des groupements amino, se composant d'un polymère d'ossature sur lequel est greffée une allylamine, caractérisé en ce que le polymère d'ossature est un copolymère carbure vinylaromatique/diène hydrogéné, et en ce que la teneur totale en azote du polymère greffé est comprise entre 0,001 et 0,05% en poids.

**2.** Polymère greffé selon la revendication 1, caractérisé en ce que le polymère d'ossature est un copolymère statistique styrène/butadiène hydrogéné ayant un rapport styrène/butadiène de 60:40 à 50:50, un poids moléculaire de 5000 à 500 000 et un degré d'hydrogénation de 95 à 99,5.

**3.** Composition d'huile lubrifiante, se composant d'une huile de base hydrocarbonée et d'additifs pour huiles lubrifiantes, caractérisée en ce qu'elle contient des polymères greffés selon la revendication 1, dans des quantités efficaces comme dispersif améliorant l'indice de viscosité.

**4.** Composition d'huile lubrifiante selon la revendication 3, caractérisée en ce que la teneur en polymère greffé selon la revendication 1 est comprise entre 0,5 et 6% en poids, par rapport à la composition d'huile lubrifiante.

**5.** Utilisation de polymères greffés contenant des groupements amino selon la revendication 1, comme additif pour huile lubrifiante, dans des proportions efficaces comme dispersif améliorant l'indice de viscosité.